# EUROPEAN PATENT APPLICATION

(11) **EP 2 724 855 A1**
(43) Date of publication of application: **30.04.2014**
(21) Application number: 12400044.9
(22) Date of filing: 24.10.2012
(51) Int. Cl.: B32B 25/08, B64C 27/46, C08J 5/12, F01D 5/28

(54) **Method of producing a composite plastic erosion protection cap and a composite plastic erosion protection cap**

(71) Applicant: Eurocopter Deutschland GmbH, 86609 Donauwörth (DE)
(72) Inventor: Kreitmair-Steck, Wolfgang, 80538 München (DE); Hebensperger, Michael, 81677 München (DE)
(74) Representative: Schmid, Rudolf

(57) **Abstract**

The invention is related to a method of producing a composite plastic erosion protection cap (1, 1.3) for rotor blades (2), especially for the leading edges (4) and the tips of the rotor blades of helicopters. A thin outer layer (6) of hard plastic and an elastomeric inner layer (7) are provided separately and are adhesively bonded. The invention is as well related to a composite plastic erosion protection cap (1, 1.3) made according to said method.

## Description

The invention is related to a method of producing a composite plastic erosion protection cap according to the preamble of claim 1 and to a composite plastic erosion protection cap according to the preamble of claim 4.

Due to high rotation speeds and a diameter of more than 10 m of the main rotor of a helicopter, any collision of the rotor blades with particles such as sand, sharp-edged gravel, debris, stones, hailstones as well as collisions with rain drops have a high kinetic energy and cause erosion of the blade material. Larger particle sizes and particles with sharp edges / sharp contours cause more damage than small, round and smooth particles. Different regions of the world have a different composition of the sand concerning particle size, particle shape and particle roughness which in turn has a different effect on the corrosion level. E.g. the operation of helicopters in the sandy environment of Arab countries or of Afghanistan, accelerates the sand erosion damage significantly. If the rotor blades don't have an erosion protection, they need a repair or replacement within a few 10 hours of operation time.

The document WO96/20108 A1 discloses an engineered ceramic component with an aerodynamic ceramic member for enhanced erosion protection of the leading edge of a rotor blade. Said hard ceramic components suffer from their inability to accommodate the typical strains for rotor blades.

The document US2004/096331 A1 discloses a thin elastomeric protective covering for protection of an article with an aerodynamic surface, such as an aeroplane propeller or helicopter rotor, from erosive damage caused by flying particulate matter. The thin elastomeric protective covering is made of polyurethane with hardness between 85 Shore A and 80 Shore D. It is applied by centrifugal casting using a silane log gammaglycidoxypropyltrimethoxysilane as a coupling agent when bonding to a metal surface such as aluminium. This one layer approach for a plastic erosion protection cap is not optimal for rain erosion because the elastomer in itself is not hard enough to resist the impact of the rain drops.

The document US2004/0118978 A1 discloses an aerofoil, particularly a helicopter main rotor blade with a leading edge protector comprising a strip of resilient polymer, preferably polyurethane, adhered to the leading edge of the blade. The disadvantages of document US2004/096331 A1 apply.

The document W02006/055038 A1 discloses a method of protecting leading edge surfaces of helicopter rotor blades, propeller blades, aircraft wings from rain and sand erosion damage, said method comprising applying one or more coatings and/or coating compositions on said leading edge surfaces. The coatings and/or coating compositions with material thicknesses between 0.5 - 2 micrometer result from liquid mixtures to be sprayed, etc. on the rotor blades and thus said coatings and/or coating compositions allow exclusively production locally bound to the rotor blades.

It is an object of the invention to provide for an improved method of producing a composite plastic erosion protection cap and it is a further object of the invention to provide a composite plastic erosion protection cap with an enhanced and reliable erosion protection for rotor blades in environments with solid particles, e.g. sand particles and in water.

The solution is provided with a method of producing a composite plastic erosion protection cap with the features of claim 1 and with a composite plastic erosion protection cap with the features of claim 4.

According to the invention a method of producing a composite plastic erosion protection cap for rotor blades, especially for the leading edges and the tips radial along the rotor blades of helicopters, comprises the steps of providing first separately a thin outer layer of hard plastic with a notch impact strength of at least 40 kJ/m², preferably more than 60 kJ/m², and an elastomeric inner layer. Secondly said elastomeric inner layer is adhesively bonded to the outer layer for the composite plastic erosion protection cap. Eventually said composite plastic erosion protection cap can be bonded with the inner layer inside to a blade body of the rotor blade with a corrosion resistant resin or a corrosion resistant adhesive. The inventive production method allows the composite plastic erosion protection cap and its two initially different layers to be formed separately from the rotor blades allowing application of remote production facilities contributing to reduced production costs at improved production quality. The inventive production method allows bonding of the two initially separate layers to the composite plastic erosion protection cap distant from the rotor blades allowing application of remote bonding facilities further contributing to reduced production costs at improved production quality. The inventive production method provides for easy removable and replaceable composite plastic erosion protection caps if seriously damaged and easy to repair erosion protection caps in case of minor damages: any holes in the composite plastic erosion protection cap caused by hard particle impact can be filled in the field with appropriate plastic material, e.g. hard plastic, applied as a hot liquid or resin, hardened at moderate temperatures or by means of UV light, , requiring only short downtimes of a helicopter concerned.

According to a preferred embodiment of the invention said thin outer layer and said elastomeric inner layer are produced by injection moulding or by deep drawing.

According to a further preferred embodiment of the invention adhesively bonding of said thin outer layer to said elastomeric inner layer is effected by a cross-linking agent and possibly a thermosetting resin.

According to a preferred embodiment of the invention a composite plastic erosion protection cap for rotor blades, especially for the leading edges and the tips of the rotor blades of helicopters, comprises a thin outer layer of hard plastic with notch impact strength of at least 40 kJ/m², preferably more than 60 kJ/m², and an elastomeric inner layer. Said elastomeric inner layer and said outer layer are adhesively bonded to each other. Said elastomeric inner layer has preferably a material thickness between 0.4 and 1.0 mm and a thin outer layer of hard plastic with a material thickness preferably between 0.02 and 0.4 mm and with a preferably extreme smooth surface to keep the drag values of the rotor blades at a minimum. An advantage of the inventive composite plastic erosion protection cap is reliable erosion protection of the leading edges and the tips of the rotor blades of helicopters for both, erosion by water drops and erosion by hard, solid particles of different sizes, shapes and roughness. The inventive composite plastic erosion protection cap is assembled from two initially different layers to be formed separately from the rotor blades allowing application of remote production facilities contributing to reduced production costs at improved production quality. The inventive composite plastic erosion protection cap is bonded of the two initially separate layers distant from the rotor blades allowing application of remote bonding facilities further contributing to reduced production costs at improved production quality. A further advantage of the invention is a composite plastic erosion protection cap easy to remove and easy to replace in case of serious damages and easy to repair erosion protection caps in case of minor damages: the holes caused by hard particle impact can be filled in the field with appropriate plastic material, e.g. hard plastic applied as a hot liquid or resin hardened at moderate temperatures or by means of UV light, requiring only short downtimes of the helicopter concerned. The inventive composite plastic erosion protection cap is less reflective under the impact of sand or radar than metallic protection caps according to the state of the art. The inventive composite plastic erosion protection cap is stiff enough to be carried from a location of assembly of the two initially separate layers to the rotor blade. A reusable support may be provided for the inventive composite plastic erosion protection cap to facilitate the transport of the inventive composite plastic erosion protection cap from the location of assembly of the two initially separate layers to the rotor blade.

According to a further preferred embodiment of the invention the outer layer is made of solid polyurethane (PU) or preferably of HMW-polyethylene (HMW-PE), or even more preferably of UHMW-polyethylene (UHMW-PE).

According to a further preferred embodiment of the invention the inner layer is made of elastomeric material like e.g. ethylene-propylene-dien-caoutchouc (EPDM), Ethylene-acrylate-caoutchouc (EAM), fluor-carbon-caoutchouc (FKM), natural caoutchouc (NR), or elastomeric polyurethane (PU).

According to a further preferred embodiment of the invention said inner layer and said outer layer are bonded using a thermosetting resin, like phenol-formaldehyde-resin, polyester-resin, epoxy-resin and/or acrylate-resin, containing cross-linking agent with materials from the group of peroxides, amines and/or biphenoles.

According to a further preferred embodiment of the invention the outer layer contains milled metal fibers, carbon fibers, carbon blacks, buckyballs, carbon nanotubes, or any combinations of these materials for increased electrical conductivity on the surface of the composite plastic erosion protection cap, e.g. in order to improve the lightning strike performance.

Preferred embodiments of the invention are outlined by way of examples with the following description with reference to the attached drawings.
Figure 1a shows an overall view of a composite plastic erosion protection cap according to the invention;
Figure 1b shows an overall view of a further composite plastic erosion protection cap according to the invention,
Figure 2a shows a cross sectional view of a schematic rotor blade adapted to a composite plastic erosion protection cap according to the invention;
Figure 2b shows a cross sectional view of the schematic rotor blade with the mounted composite plastic erosion protection cap according to the invention,
Figure 3a shows a cross sectional view of a composite plastic erosion protection cap according to the invention, and
Figure 3b shows a cross sectional view of a further composite plastic erosion protection cap according to the invention.

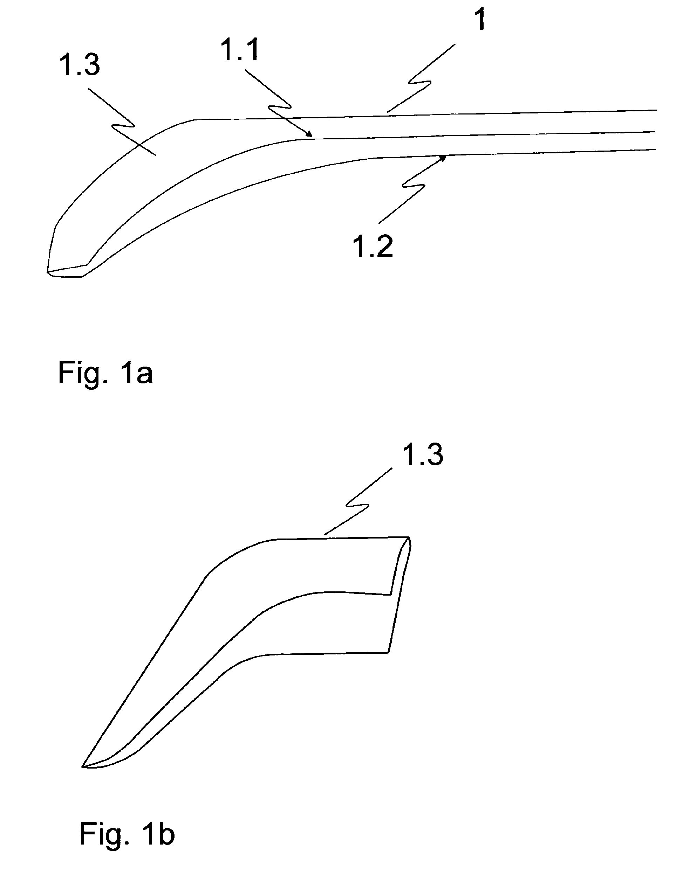

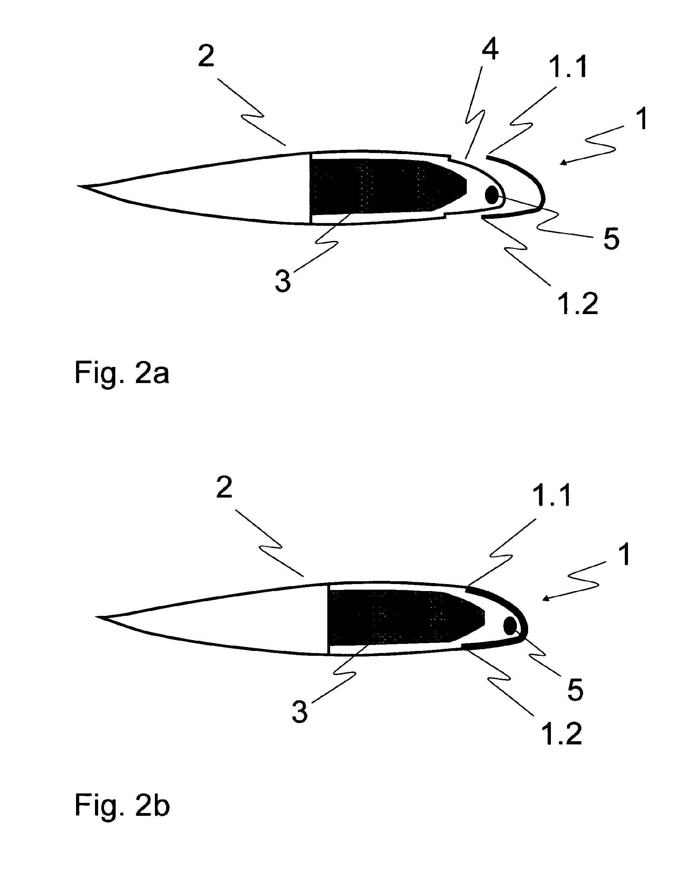

According to Figure 1a a composite plastic erosion protection cap 1 is profiled for an integral adaption along a whole leading edge of a rotor blade 2 (see Fig. 2a and 2b) extending radial inside from a rotor head (not shown) to a tip radial outside of said rotor blade 2 of a helicopter. The composite plastic erosion protection cap 1 extends along said rotor blade 2 between an upper edge 1.1 for arrangement radial along an overwing of said rotor blade 2 and a lower edge 1.2 for arrangement radial along an underwing of said rotor blade 2. Said composite plastic erosion protection cap 1 includes a rearward bent part 1.3 adapted to the tip.

According to Figure 1b corresponding features are referred to with the same references as in Fig. 1 a. The rearward bent part 1.3 is adapted to the leading edge of the tip of the rotor blade 2 only, instead of the composite plastic erosion protection cap 1.

According to Figure 2a corresponding features are referred to with the same references as in Fig. 1 a and 1b. The composite rotor blade 2 is profiled with a recess radial along its leading edge 4. Said recess is adapted to and prepared for fixation of the profiled composite plastic erosion protection cap 1. The composite plastic erosion protection cap 1 is oriented with the upper edge 1.1 towards an upper surface of the composite rotor blade 2 and with the lower edge 1.2 towards a lower surface along the leading edge 4 of the composite rotor blade 2.

The composite rotor blade 2 comprises a plastic foam kernel 3 for stability improvement of the rotor blade 2 and the composite rotor blade 2 further comprises adjacent to the leading edge 4 a non-structural mass 5 for mass balancing of the composite rotor blade 2.

According to Figure 2b corresponding features are referred to with the same references as in Fig. 1 a to 2a. The composite plastic erosion protection cap 1 is mounted on the recess radial along the leading edge 4 of the composite rotor blade 2 and adhesively fixed. The composite plastic erosion protection cap 1 and the recess are profiled correspondingly such that the interface of the upper edge 1.1 of the composite plastic erosion protection cap 1 with the recess is smoothly in line radial and transversal along the overwing and that correspondingly at the lower edge 1.2 the interface of the composite plastic erosion protection cap 1 with the recess is smoothly in line radial and transversal along the underwing of the composite rotor blade 2.

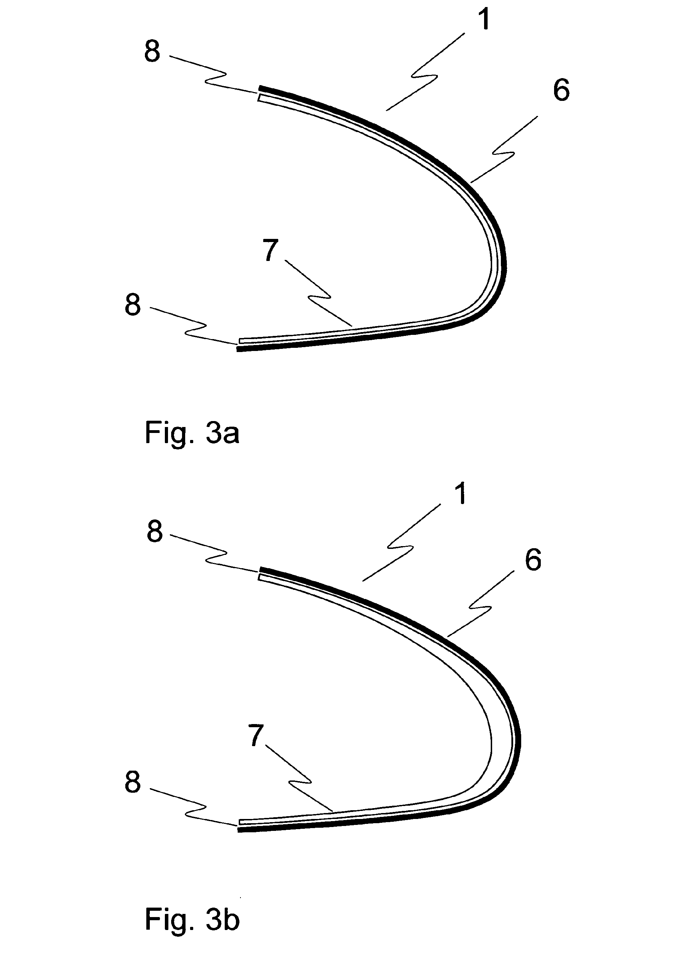

According to Figure 3a corresponding features are referred to with the same references as in Fig. 1 a to 2b. The composite plastic erosion protection cap 1 is provided with an inner elastomeric layer 7 and a thin outer layer 6 of hard plastic each for radial extension along the leading edge 4 of the composite rotor blade 2. The inner elastomeric layer 7 is between the recess and the thin outer layer 6 of hard plastic while the outer layer 6 of hard plastic is distal to the recess.

The inner elastomeric layer 7 is chemically joined radial along the thin outer layer 6 of hard plastic by help of a thermosetting resin 8 at the contact surfaces. The inner elastomeric layer 7 has a uniform thickness through all its cross section. The outer layer 6 of the composite plastic erosion protection cap 1 is made of solid polyurethane (PU), of HMW-polyethylene (HMW= high molecular weight) or of UHMW-polyethylene (UHMW= ultra-high molecular weight) with a material thickness of 0.02 - 0.4 mm while the inner elastomeric layer 7 is made of elastomeric material like e.g. ethylene-propylene-dien-caoutchouc (EPDM), Ethylene-acrylate-caoutchouc (EAM), fluor-carbon-caoutchouc (FKM), natural caoutchouc (NR), or elastomeric polyurethane (PU) with a material thickness of 0.4 mm to 1 mm. The outer layer 6 of hard plastic has a notch impact strength of more than 60 kJ/m² and is extremely smooth, i. e. the outer layer 6 has a roughness < 2 µm measured according to DIN EN ISO 4288 towards the outside.

For increased electrical conductivity on the surface of the composite plastic erosion protection cap 1, e.g. in order to improve the lightning strike performance, the outer layer 6 contains milled metal fibers, carbon fibers, carbon blacks, buckyballs, carbon nanotubes, or any combinations of these materials.

According to Fig. 3b the thickness of the inner elastomeric layer 7 at profile key of the composite plastic erosion protection cap 1 is increased by e.g. approximately > 150% of the thickness of the outer hard plastic layer, depending on the selected materials, for increased elasticity.

Method of production of the composite plastic erosion protection cap

A method of producing a composite plastic erosion protection cap 1, 1.3 for the leading edges 4 and the tips of the rotor blades 2 of helicopters is accomplished with the following steps: Providing a thin outer layer 6 of hard plastic using thermo-forming or any molding technique and providing separately an elastomeric inner layer 7, e. g. by using injection compression molding. Adhesively bonding said elastomeric inner layer 7 to the outer layer 6, said bonding of the thin outer layer 6 and said elastomeric inner layer 7 being effected directly to the corresponding recess at the leading edge of the rotor blade 1.

### Reference List

- 1: composite plastic erosion protection cap
- 1.1: upper edge
- 1.2: lower edge
- 1.3: rearward bent part
- 2: composite rotor blade
- 3: plastic foam kernel
- 4: leading edge
- 5: non-structural mass
- 6: thin outer layer
- 7: inner elastomeric layer
- 8: thermal-setting resin

## Claims

1. A method of producing a composite plastic erosion protection cap (1, 1.3) for rotor blades (2), especially for the leading edges (4) and the tips of the rotor blades of helicopters, by providing,
- a thin outer layer (6) of hard plastic with notch impact strength of at least 40 kJ/m², preferably more than 60 kJ/m², and
- an elastomeric inner layer (7),
**characterized by**
- providing separately said elastomeric inner layer (7) and said outer layer (6), and
- adhesively bonding said elastomeric inner layer (7) to the outer layer (6).

2. The method according to claim 1,
**characterized by** providing said thin outer layer (6) and said elastomeric inner layer (7) by injection moulding or by deep drawing.

3. The method according to claim 1,
**characterized by** adhesively bonding with a cross-linking agent.

4. A composite plastic erosion protection cap (1, 1.3) for rotor blades (2), especially for the leading edges (4) and the tips of the rotor blades of helicopters, made according to any of the preceding claims, comprising,
- a thin outer layer (6) of hard plastic with notch impact strength of at least 40 kJ/m², preferably more than 60 kJ/m², and
- an elastomeric inner layer (7),
**characterized in that**
- said elastomeric inner layer (7) and said outer layer (6) are adhesively bonded to each other.

5. The composite plastic erosion protection cap (1, 1.3) according to claim 4,
**characterized by** an inner layer (7) between 0.4 and 1.0 mm and a smooth outer layer (6) between 0.02 and 0.4 mm.

6. The composite plastic erosion protection cap (1, 1.3) for rotor blades (2) according to claim 4,
**characterized by** an outer layer (6) of solid polyurethane (PU) or preferably of HMW-polyethylene (HMW-PE), or even more preferably of UHMW-polyethylene (UHMW-PE).

7. The composite plastic erosion protection cap (1, 1.3) for rotor blades (2) according to claim 4,
**characterized by** an inner layer (7) made of elastomeric material like e.g. ethylene-propylene-dien-caoutchouc (EPDM), Ethylene-acrylate-caoutchouc (EAM), fluor-carbon-caoutchouc (FKM), natural caoutchouc (NR), or elastomeric polyurethane (PU).

8. The composite plastic erosion protection cap (1, 1.3) for rotor blades (2) according to claim 4,
**characterized by** said inner layer (7) and said outer layer (6) being bonded using a thermosetting resin, like phenol-formaldehyde-resin, polyester-resin, epoxy-resin and/or acrylate-resin, containing cross-linking agent with materials from the group of peroxides, amines and/or biphenoles or other thermosetting adhesive.

9. The composite plastic erosion protection cap (1, 1.3) for rotor blades (2) according to claim 4,
**characterized by** the outer layer (6) containing milled metal fibers, carbon fibers, carbon blacks, buckyballs, carbon nanotubes, or any combinations of these materials.
